# EUROPÄISCHE PATENTSCHRIFT

(11) **EP 4 323 655 B1**
(45) Veröffentlichungstag und Bekanntmachung des Hinweises auf die Patenterteilung: **25.09.2024**
(21) Anmeldenummer: 22722759.2
(22) Anmeldetag: 13.04.2022
(51) Int. Cl.: F16B 13/00, F16B 13/08, B25B 13/48, B25B 31/00

(54) **HINTERSCHNITTANKER, SETZWERKZEUG ZUM SETZEN EINES HINTERSCHNITTANKERS UND SETZVERFAHREN FÜR EINEN HINTERSCHNITTANKER**
UNDERCUT ANCHOR, SETTING TOOL FOR SETTING AN UNDERCUT ANCHOR AND SETTING METHOD FOR AN UNDERCUT ANCHOR
ANCRE CONTRE-DÉPOUILLÉE, OUTIL DE POSE POUR LA POSE D'UNE ANCRE CONTRE-DÉPOUILLÉE ET PROCÉDÉ DE POSE POUR UNE ANCRE CONTRE-DÉPOUILLÉE

(30) Priorität: 13.04.2021 DE 102021109198
(43) Veröffentlichungstag der Anmeldung: 21.02.2024
(73) Patentinhaber: KEIL Befestigungstechnik GmbH, 51766 Engelskirchen (DE)
(72) Erfinder: BERGFELDER, Jürgen, 51766 Engelskirchen (DE); WOLLMANN, Alexander, 51580 Reichshof (DE)
(74) Vertreter: Bobzien, Hans Christoph
(86) Internationale Anmeldenummer: PCT/EP2022/059913
(87) Internationale Veröffentlichungsnummer: WO 2022/219062

(56) Entgegenhaltungen:
- DE-U1- 202012 001 547
- DE-U1- 202020 100 542
- US-A1- 2015 258 672
- US-A1- 2021 087 932

## Beschreibung

Offenbart ist ein in eine Bohrung eines Fügepartners, insbesondere einer Werkstoffplatte, z.B. einer Betonplatte oder eine Steinplatte oder dergleichen einsetzbarer Hinterschnittanker, ein Setzwerkzeug zum Befestigen oder Setzen eines derartigen Hinterschnittankers in einer Sacklochbohrung des Fügepartners. Die Erfindung betrifft ein Verfahren zur Befestigung eines Hinterschnittankers in einem diesen aufnehmenden Sackloch eines Fügepartners.

### Stand der Technik

Ein gattungsgemäßer Hinterschnittanker umfasst einen sich entlang und um eine Ankerlängsachse erstreckenden, im Wesentlichen hohlzylindrischen Grundkörper, der sich von einem in Einbaulage angeordneten Außenende auf einer Oberfläche des Fügepartners zu einem Innenende innerhalb eines Sacklochs innerhalb des Fügepartners erstreckt. An dem Außenende ist ein radial nach außen ragender Aufsitzabsatz oder Aufsitzbund ausgebildet, der eine sich entlang der Ankerlängsachse erstreckende Durchgangsöffnung mit einem Innengewinde aufweist. Mit diesem radial abragenden Aufsitzabsatz ist der Hinterschnittanker um eine Sacklochbohrung in dem Fügepartner herum auf einer Außenfläche des Fügepartners aufsetzbar. Ferner umfasst der Aufsitzabsatz Schlüsselflächen an einer äußeren Umfangsfläche desselben zur drehfesten Verbindung oder zum drehfesten Ansetzen eines Werkzeugs zum Anordnen des Hinterschnittankers in der Sacklochbohrung des Fügepartners. Von dem Aufsitzabsatz parallel zur Ankerlängsachse erstreckend oder entlang der Ankerlängsachse erstreckend sind an dem Aufsitzabsatz mehrere armförmige und spreizbare Spreizarme nach außen versetzt zur Ankerlängsachse erstreckend angeordnet. Schließlich ist an dem Innenende dieser Spreizarme jeweils ein radial nach außen ragender Hinterschnittabsatz ausgebildet. Dieser Hinterschnittabsatz am Innenende des Hinterschnittankers greift in Einbaulage in eine entsprechend am Boden des Sacklochs ausgebildeten Hinterschnitt ein, wenn eine Schraube in das Innengewinde der Durchgangsöffnung des Hinterschnittankers eingedreht wird und dabei die Spreizarme mit den an diesen ausgebildeten Hinterschnittabsätze von der Ankerlängsachse nach außen spreizt und so die Hinterschnittabsätze in diesen Hinterschnitt des Fügepartners eindrücken, um somit eine unverlierbare Verbindung zwischen dem Hinterschnittanker und dem Fügepartner zu realisieren.

Ein solcher Hinterschnittanker wird auch als "Setzanker" oder einfach als "Anker" bezeichnet. Auf die Auflagefläche des Fügepartners, an welcher der Aufsitzabsatz aufsitzt, kann sodann ein Befestigungsmittel angeordnet werden, welches häufig als "Agraffe" bezeichnet wird. Eine derartige Agraffe ist ein Formstück, insbesondere ein in eine bestimmte biegestabile Form gebrachtes Metallstück mit einer Durchgangsöffnung, die auf den Aufsitzabsatz aufsetzbar ist und sodann über eine Schraube mit dem Hinterschnittanker verschraubbar ist, sodass die Schraube die Agraffe an dem Fügepartner unverlierbar fixiert.

Ein gattungsgemäßes Befestigungs- oder Setzverfahren ist bekannt aus DE 20 2020 100542 U1.

### Nachteile am Stand der Technik

Die Herstellung des Hinterschnitts am Grund des Sacklochs ist jedoch relativ zeitaufwendig und kann wegen der Sicherheitsrelevanz der Befestigung häufig nur von geschultem Personal mit speziellen Werkzeugen durchgeführt werden. Die Bohrung mit dem Hinterschnitt wird in grundsätzlich zwei Verfahrensschritten durchgeführt. Zunächst wird mit einem Zylinderbohrer ein zylindrisches Sackloch in dem Fügepartner erzeugt, welches die erforderliche Eindringtiefe aufweist. Am Boden dieses zylindrischen Sacklochs wird sodann in einem zweiten Verfahrensschritt mit einem exzentrisch auslenkbaren, radial einseitig abwinkelbaren Hinterschnitt-Fassadenbohrer der Hinterschnitt erzeugt. Dieser Hinterschnitt-Fassadenbohrer weist am unteren Ende eines um eine Rotationsachse rotierenden Bohrers eine einseitig abragende, hakenförmige Nase auf. Wird nunmehr der Hinterschnitt-Fassadenbohrer in Rotation versetzt und diese Nase des Bohrers seitlich aus der Rotationsachse abgewinkelt, schneidet diese einseitig abragende Nase bei Rotation einen Hinterschnitt in die seitliche Mantelfläche des zylindrischen Sacklochs und erzeugt somit an dem Boden des Sacklochs den erforderlichen Hinterschnitt, also einen radial über die sonstige äußere Mantelfläche der Bohrung herausragenden Abschnitt, in welche der Hinterschnittabsatz des Hinterschnittankers in Einbaulage formschlüssig eingreifen kann.

Zunächst einmal ist dieses zweistufige Verfahren mit der Fertigung der Grundbohrung und der anschließenden Grundbohrung und dem anschließenden Vorsehen des Hinterschnitts relativ aufwendig. Ein Hinterschnitt-Fassadenbohrer ist als Spezialwerkzeug relativ teuer, das auch nur von geschultem Personal bedient werden sollte. Mitunter treten bei unsachgemäßer Handhabung durch Materialermüdungen oder zu weites Eindringen Zerstörungen des Fügepartners auf. Bei stark abrasiven, härteren Materialien der Fügepartner nutzen die Spezialbohrer und die Werkzeuge sich schnell ab, sodass die Bohrlöcher geprüft werden müssen, was insbesondere bei grö-ßeren Lasten von sicherheitstechnischer Bedeutung ist, z.B. um ein Herabfallen einer Fassadenplatte aus größeren Höhen zu vermeiden.

Ein solcher Hinterschnittanker ist beispielsweise bekannt aus dem Gebrauchsmuster DE 20 2012 001 547 U1 der Vorgängergesellschaft der Anmelderin.

US 2,003,100 offenbart ebenfalls einen Hinterschnittanker und US 2,561,433 offenbart eine Hülse ohne einen Aufsitztabsatz, die in eine Sacklochbohrung eingesetzt wird und sodann gespreizt wird.

DE 196 22 544 offenbart einen Hinterschnittanker mit einer Spreizhülse, die in ein Sackloch eingesetzt wird. Durch Eindrehen einer Ankerstange mittels einer Anpressmutter werden Schneiden am unteren Ende der Spreizhülse radial nach außen gebogen.

DE 10 2010 025 975 A1 betrifft einen Metalldübel 1, der radial abstehende Zinnen 2 umfasst, welche sich verkeilen in einer hinteren Umfangskante 23. Der Metalldübel 1 weist an dem äußeren Ende einen äußeren Umfangsabschnitt 3 mit Ausnehmungen auf, sodass bei Rotation Kerben ausgebildet sind, welche in dem Substratmaterial (Stein) einen Hinterschnitt erzeugen.

DE 10 2012 104 050 A1 offenbart einen Spreizdübel 1 und ein Setzwerkzeug zum Setzten dieses Spreizdübels.

Noch weiterer Stand der Technik ist bekannt aus DE 20 2012 001547 U1, US2015/258672 A1 und US 2021/087932 A1.

Schließlich offenbart DE 44 00 895 ein schraubbares Werkzeug mit Sperrklingen, das in ein Bohrloch mit einem vorhandenen Hinterschnitt eingesetzt wird.

Als weiterer Stand der Technik sind sogenannte Nietanker bekannt, die in eine reguläre Sacklochbohrung an dem Fügepartner eingebracht werden können, die also keinen Hinterschnitt am Boden des Sacklochs benötigen. Solche Nietanker umfassen einen sich in einer Nietlängsrichtung um einen Zugdorn herum angeordneten, hohlzylindrischen Nietkörper, der mit einem unteren Ende auf einer Zugplatte des Zugdorns aufliegt und mit diesem voran in das Sackloch eingeschoben wird. Sodann wird der Zuganker angezogen und die Nietanker in dem Sackloch gehalten, wodurch sich der Nietanker in der Sacklochbohrung spreizt. Da der Zugdorn am unteren Ende die Zugplatte aufweist, wird das Material des Zugankers gestaucht und umfänglich gegen die innere Mantelfläche des umgebenden Sacklochs gepresst. Hiermit wird somit lediglich eine kraftschlüssige Verbindung zwischen dem Nietanker und dem Sackloch realisiert, im Gegensatz zum Hinterschnittanker also kein besonders verlässlicher und stabiler Formschluss. Aus diesem Grund ist ein Nietanker nicht für die Befestigung von Fügepartnern in größeren Höhen geeignet. Ferner hat ein Nietanker den Nachteil, dass die Sacklochbohrung tiefer ausgestaltet sein muss als bei einem vergleichbaren Hinterschnittanker und insofern die verbleibende Reststärke des Fügepartners, also des Materials vom Boden des Sacklochs bis zur gegenüberliegenden Fläche bisweilen zu gering ist, was zu Brüchen an den Befestigungsschnittstellen führen kann.

### Aufgabe

Ausgehend von dem eingangs genannten Stand der Technik und den damit verbundenen Nachteilen liegt der Erfindung somit die Aufgabe zugrunde, die zuvor genannten Nachteile zumindest teilweise zu vermeiden und insbesondere ein Verfahren zum Befestigen eines Hinterschnittankers vorzusehen, dass die vorgenannten Nachteile zumindest teilweise vermeidet und insbesondere eine einfache und verlässliche Befestigung des Hinterschnittankers in dem Fügepartner realisiert.

### Erfindung

Erfindungsgemäß wird diese Aufgabe bereits durch den unabhängigen Anspruch 1 gelöst. Bevorzugte, aber nicht zwingende Merkmale sind in dem Unteranspruch 2 wiedergegeben.

Offenbart werden zwei wesentliche Komponenten, nämlich zum einen Hinterschnittanker, der so ausgebildet ist, dass dieser den Hinterschnitt durch Rotation desselben selbstständig in dem Fügepartner am Boden des Sacklochs erzeugt, also schneidet.

Ferner wird ein besonderes Setzwerkzeug vorgeschlagen, welches ausgebildet ist, einen solchen Hinterschnittanker eingesetzt in das Sackloch zu drehen und gleichzeitig aufzuspreizen, also die Spreizarme mit den Hinterschnittabsätzen am Innenende von der Ankerlängsachse, die somit als Rotationsachse fungiert, nach außen zu spreizen.

Die Ausbildung des Hinterschnittankers ermöglicht es somit, dass der im Stand der Technik erforderliche zweite Schritt zur Fertigung des Hinterschnitts im Fügepartner von dem Hinterschnittanker selbst erfolgt und der zweite Schritt, nämlich das Schneiden des Hinterschnitts mit dem Hinterschnitt-Fassadenbohrer völlig entfällt.

Bei dem erfindungsgemäßen Verfahren muss insofern nur noch ein Sackloch in der entsprechenden Tiefe in den Fügepartner gebohrt werden. Sodann kann der Hinterschnittanker mit seinem Vorderende in dieses Sackloch eingesetzt werden. Durch Rotation und Spreizung des Hinterschnittankers wird der erforderliche Hinterschnitt am Boden des Sachlochs durch den Hinterschnittanker selbst erzeugt. Bei der Drehung des Hinterschnittankers um die Ankerlängsachse wird der Hinterschnitt am Grund, also unteren Ende des Sacklochs oder kurz oberhalb davon erzeugt. Sodann kann nach Entfernen des entsprechenden Setzwerkzeugs das Halteelement, insbesondere eine Agraffe auf dem Anker befestigt werden, indem das Halteelement auf den Anker aufgesetzt wird und sodann mit einer Schraube an dem Fügepartner unverlierbar befestigt wird. Der Hinterschnitt ist insofern exakt angepasst an den jeweiligen Hinterschnittanker, was eine besonders stabile und sichere, formschlüssige Verbindung realisiert, bei dem Fehler verfahrensbedingt ausgeschlossen sind.

In dieser Beschreibung beziehen sich die Begriffe distal und proximal auf das mit dem Antriebsende verbundene Antriebswerkzeug, wie z.B. einen Akku-Schrauber. Proximal ist also zu dem Akkuschrauber hin orientiert, wohingegen distal von dem Akkuschrauber weg orientiert ist.

Der Hinterschnittanker kann grundsätzlich für sehr viele Materialien an Fügepartnern eingesetzt werden. Für weichere Materialien ist der normale Hinterschnittanker mit den seitlichen Kanten der einzelnen Hinterschnittabsätze am Innenende der Spreizarme ausreichend, die zuerst in das Sackloch eingreifen, um den Hinterschnitt in dem aufnehmenden Material des Fügepartners zu erzeugen. Dieses ist z.B. möglich bei Faserzement, Schichtpressstoff (HPL), Kunststoff, Faserbeton, Mineralwerkstoff oder UHPC.

Gefertigt wird ein solcher Hinterschnittanker vorzugsweise aus einem Vollmaterial in verschiedenen spannenden Fertigungsschritten, insbesondere einem Stahl-Vollmaterial, besonders bevorzugt aus einem Sechs-, einem Vierkant- oder einem Rund-Vollmaterial.

Die vorzugswese vier Spreizarme sind - in der Ansicht von unten - vorzugsweise rotationssymmetrisch um die Ankerlängsachse herum auf einem diesen umschließenden Kreis angeordnet und erstrecken sich in der Längsrichtung des Hinterschnittankers von der Unterseite des Aufsitzabsatzes zum Innenende hin. Jeweils zwischen zwei aneinander angrenzenden Spreizarmen ist ein Spalt oder ein Abstand ausgebildet, welcher vorzugsweise mittels Fräsen in der zylindrischen Mantelfläche erzeugt ist, und sich entlang der gesamten Länge der Spreizarme erstreckt, diese also voneinander trennt, so dass diese einzeln nach außen gespreizt werden können zur optimalen Anpassung an die Ausgestaltung des Sacklochs. Vorzugsweise umfasst der Spreizanker vier auf einem gemeinsamen Kreis an der Unterseite des Aufsitzabsatzes ausgebildete Spreizarme, die sich gleichmäßig beabstandet zueinander um die Ankerlängsachse von der Unterseite des Aufsitzabsatzes zum Innenende erstreckend angeordnet sind.

Am Innenende eines jeden Spreizarms ist ein vorzugsweise radial nach außen spitz zulaufender Hinterschnittabsatz ausgebildet, der etwa um die radiale Breite der Spreizarme nochmals radial nach außen vorsteht.

Dieser im Wesentlichen spitz radial nach außen ragende Hinterschnittabsatz wird vorzugsweise durch zwei Schenkel gebildet, die zwischen sich einen spitzen Winkel einschließen, nämlich einem sich in Montagestellung, also beim Einsetzen in das Sackloch, horizontal erstreckender Innenschenkel am Innenende der Spreizarme sowie einem dem Außenende oder dem Aufsitzabsatz zugewandter Außenschenkel, der mit dem Innenschenkel radial außenseitig einen Winkel von ca. 45 Grad einschließt. Zur Realisierung der erforderlichen Stabilität beträgt die Höhe der Hinterschnittabsätze am Außenende 0,5 bis 1,5 mm, vorzugsweise 0,8 bis 1,3 mm und ist somit deutlich stabiler als bekannte Hinterschnittabsätze ausgebildet, um das Schneiden des Hinterschnitts zu begünstigen.

Bevorzugt ist der Hinterschnittanker einen besonders stabilen, gegenüber dem Stand der Technik höheren Hinterschnittabsatz am unteren und radial nach außen gerichteten Innenende der Spreizarme auf. Dieses ist vor allem so, weil am radialen Außenenden bzw. an den äußeren Umfangsflächen der Hinterschnittabsätze zusätzlich eine Rändelung ausgebildet sein kann, um den Materialabtrag für die Bildung des Hinterschnitts in dem Sackloch zu verbessern und zu vergrö-ßern.

Zur weiteren Verbesserung der Schneidwirkung zur Herstellung des Hinterschnitts kann neben den vorzugsweise winkelförmigen Schneidkanten in den äußeren Umfangsflächen der vor allem als Kreisbogensegmente ausgebildeten Hinterschnittabsätze etwa zwei bis viermal so hoch ausgebildet höher ausgebildet sein. Bevorzugt beträgt die Höhe des Hinterschnittabsatzes am radial außenseitigen Ende zwischen 0,2 bis 1 mm, vorzugsweis 0,4 bis 0,8 mm, besonders bevorzugt allem 0,5 mm.

Im Lieferzustand sind die Innenenden der Spreizarme vorzugsweise so zusammengedrückt, dass die äußere Umfangsfläche der Hinterschnittabsätze mit dem Außenradius oder Ansatzpunkte der Spreizarme unterhalb des Aufsatzbunds abschließt oder diese auf einer Linie liegen.

Die Schneidkanten zum Schneiden des Hinterschnitts können an den seitlichen Flanken, also angrenzend an einen Spalt zwischen zwei Spreizarmen ausgebildet sein.

Eine verbesserte Schneidleistung ist dadurch erzielbar, wenn an den Hinterschnittabsätzen zusätzlich mindestens ein, vorzugsweise mehrere Schneidkerben vorgesehen sind, die weitere Schneidkanten bilden.

Vorzugsweise sind diese als in den Hinterschnittabsätze ausgebildete Schneidkerben oder Schneidausnehmungen ausgebildet. Bevorzugt sind diese Schneidkerben um die Ankerlängsachse herum, die als Rotationsachse dient, rotationssymmetrisch ausgebildet, um einen gleichmäßigen Schnittverlauf und weniger Unwucht zu erzeugen. Besonders bevorzugt sind die Schneidkerben etwa mittig oder genau mittig in einem jeweiligen Hinterschnittabsatz ausgebildet und erstrecken sich über die gesamte Breite des Hinterschnittabsatzes, also bis zu dem jeweiligen Spreizarm. Vorzugsweise sind die Kerben in der Geometrie eines gleichschenkeligen oder gleichseitigen Dreiecks ausgebildet.

Als besonders bevorzugt hat sich die mittige Ausbildung der Schneidkerben in jedem Hinterchnittabsatz erwiesen, so dass die Schneidkerben auf Verbindungslinien durch die mittlere Rotationsachse diametral gegenüberliegen.

Möglich ist auch, dass der Hinterschnittabsatz oder die Hinterschnittabsätze der Spreizarme radial außenseitig eine Rändelung aufweisen, z.B. eine Längs- oder eine Kreuz-Rändelung, um den notwendigen Materialabtrag zu realisieren. Hierbei kann es zweckmäßig sein, dass die Hinterschnittabsätze stabiler, also entlang der Ankerlängsachse erstreckend am radialen Außenrand höher ausgebildet sind als bei der ersten Ausführungsform, insbesondere mit einer Höhe zwischen 0,5 bis 1,5 mm, bevorzugt 0,8 bis 1,3 mm im Bereich zwischen dem Innenschenkel und dem Außenschenkel der Hinterschnittabsätze.

Möglich ist selbstverständlich auch eine Kombination der Rändelung mit weiteren Schneidkanten oder Schneidausnehmungen.

Für das Setzen, also das Anordnen des Hinterschnittankers in dem Sackloch des Fügepartners wurde bei der Entwicklung der Erfindung ferner ein Setzwerkzeug entwickelt, für das getrennt von dem Hinterschnittanker Schutz beansprucht wird.

Das vorgeschlagene Setzwerkzeug ist ausgebildet, um mit einem in Einbaulage außenseitigen Ende eines Verbundankers drehfest verbunden zu werden, insbesondere, um das Außenende drehfest in sich aufzunehmen, um den Hinterschnittanker um die Ankerlängsachse herum zu drehen und die Spreizarme des Verbundankers nach außen aufzuspreizen, also im Verhältnis zur Ankerlängsachse nach außen zu biegen, wozu die Spreizarme an der Verbindungsstelle zum Aufsitzabsatz oder Aufsitzbund eine Sollbiegestelle aufweisen können.

Offenbart ist ferner ein Setzwerkzeug zum Setzen eines Hinterschnittankers in einem Sackloch eines insbesondere plattenförmig ausgebildeten Fügepartners mit einer sich um eine Rotationsachse von einem proximalen, als Antriebsende ausgebildeten Ende bis zum einem distalen, als Wirkende ausgebildeten Ende erstreckt. Das Antriebsende ist folglich ausgebildet zur drehfesten Verbindung mit einem Antriebsgerät, z.B. einer Bohrmaschine, einem Akkuschrauber oder dergleichen. Das Antriebsende erfüllt somit die Funktion, ein Drehmoment auf das Setzwerkzeug zu übertragen. Besonders bevorzugt ist das Antriebsende als Sechskant ausgebildet und somit in eine normale Bitaufnahme einer Bohrmaschine oder ein anderes Rotationswerkzeug oder einen anderen Antrieb einsetzbar. Das Wirkende ist auch ausgebildet, um dieses Drehmoment auf einen Hinterschnittanker zu übertragen, wozu dieses vorzugsweise eine Aufnahmeöffnung für die Aufnahme eines Aufsitzabsatzes des Hinterschnittankers aufweist.

An dem Wirkende ist eine Stecknuss mit einer Aufnahmeöffnung und darin ausgebildeten Schlüsselflächen zur drehfesten Aufnahme eines Aufsitzabsatzes eines Hinterschnittankers ausgebildet, welche also auf den Aufsitzabsatz des Hinterschnittankers zur Realisierung einer formschlüssigen Verbindung aufgesetzt werden kann. Diese Stecknuss ist drehfest mit der Hauptwelle verbunden und gleichzeitig längsverschieblich entlang der Hauptwelle auf dieser angeordnet. An dem distalen Wirkende ist die Hauptwelle als Einsteckspreizdorn mit einem Spreizende am distalen Vorderende ausgebildet und eine Druckfeder wirkt auf ein proximales Ende der Stecknuss durch das Verschieben der Stecknuss auf der Hauptwelle zum proximalen Antriebsende hin wird somit das Spreizende der Hauptwelle zwischen die Spreizarme des betreffenden Ankers eingeschoben und drückt dabei diese Spreizarme radial nach außen von der Ankerlängsachse weg, sodass die Hinterschnittabsätze an den Spreizarmen am Sacklochunterende des Sacklochs anliegen. Nunmehr kann durch die drehfeste Verbindung der Stecknuss mit der Hauptwelle von dem Setzwerkzeug das notwendige Drehmoment aufgebracht werden, um somit den Hinterschnitt am Sacklochboden des Sacklochs zu schneiden.

Die bevorzugte Ausführungsform sieht die Ausbildung des Antriebsendes als Bit vor, der z. B. mit einem Universalbithalter des Antriebswerkzeuges lösbar und drehfest verbindbar ist. Bevorzugt weist der Universalbithalter eine Kugelsperre auf, die durch Ziehen eines Rings lösbar ist und womit das Setzwerkzeug in den Universalbithalter einsetzbar ist. Bei dieser Ausgestaltung ist die Druckfeder also zwischen dem Vorderende des Universalbithalters und dem proximalen Hinterende der Nuss angeordnet und drückt die Nuss somit entlang der Setzwerkzeuglängsachse zum distalen Wirkende hin.

Die drehfeste Verbindung zwischen der Hauptwelle und der Nuss kann über verschiedene Weisen erfolgen. Bevorzugt hat sich das Ausbilden von komplementären, formschlüssig ineinandergreifenden Fügeflächen zwischen den Fügepartnern erwiesen, wobei eine komplementäre Vierkant- oder Sechskantausbildung besonders bevorzugt ist. Möglich ist aber auch die Anordnung einer Passfeder zwischen Hauptwelle und Nuss.

Bei einer bevorzugten Ausführungsform kann die Hauptwelle des Setzwerkzeugs distal von dem Antriebsende einen Hülsenanschlag aufweisen, der einen gegenüber dem Außendurchmesser des Antriebsendes verbreiterten Außendurchmesser aufweist und welcher somit als distaler Anschlag für die Anlage einer Hülse fungiert.

Distal von diesem Hülsenanschlag erfolgt die drehfeste Befestigung einer Nuss oder Stecknuss an der Hauptwelle.

Vorzugsweise ist hierzu ein Nussabschnitt an der Hauptwelle ausgebildet, also ein Bereich, an dem die Nuss drehfest und längsverschieblich mit der Hauptwelle verbunden ist. Vorzugsweise weist dieser Nussabschnitt einen gegenüber dem Hülsenanschlag reduzierten Nussabschnittdurchmesser auf.

Eine bevorzugte Möglichkeit zur Realisierung der drehfesten, aber relativbeglichen Verbindung zwischen der Stecknuss und der Hauptwelle besteht in einer in die äußere Mantelfläche der Stecknuss eingedrehte Schraube, die in eine in einer Seite der Hauptwelle ausgebildete Langnut eingreift. Diese Langnut definiert somit gleichzeitig die vordere und hintere Anschlagposition der Relativbewegung der Stecknuss in der diese aufnehmenden Hülse.

Die distalseitige axiale Fixierung der Nuss auf der Hauptwelle bzw. die Bildung eines Anschlags auf der Hauptwelle zum Anliegen der Nuss erfolgt bevorzugt über einen Sprengring, der insbesondere in dem Bereich unmittelbar vor dem Spreizende am distalen Vorderende der Hauptwelle sitzt.

Distal von diesem Hülsenanschlag kann an der Hauptwelle ein Spreizabschnitt ausgebildet sein, der wieder einen gegenüber einem Außendurchmesser des Hülsenanschlags reduzierten Außendurchmesser aufweisen kann.

Dieser Spreizabschnitt kann an seinem distalen Ende das Spreizende aufweisen, ist also ausgebildet, um in die Gewindeöffnung des Hinterschnittankers eingeschoben zu werden und dabei die spreizbaren Verbindungsabschnitte mit den an diesen ausgebildeten Hinterschnittabsätzen radial nach außen zu spreizen.

Bei der bevorzugten Ausführungsform ist das Spreizende am distalen Ende der Hauptwelle zylindrisch ausgebildet und kann vorzugsweise gehärtet sein. Mitunter kann dieses Spreizende auch einen leicht reduzierten Außendurchmesser gegenüber dem restlichen Durchmesser der Hauptwelle aufweisen. Eine Hülse ist proximal an dem Hülsenanschlag mit einer zentralen Durchgangsöffnung anliegend auf die Hauptwelle aufgesetzt und ferner proximal fixiert, was durch eine Mutter oder bevorzugt durch einen Sprengring erfolgen kann. Bei dieser Ausführungsform ist ferner die Druckfeder zwischen der Hülse und der Stecknuss eingesetzt, so dass diese Ausführungsform des Einsteckwerkzeugs als vollkommen separates Teil mit der Feder verbaut ausgeliefert werden kann.

Die Erfindung betrifft ein Befestigungsverfahren oder ein Setzverfahren eines Hinterschnittankers in einem Sackloch eines Fügepartners insbesondere einer Betonplatte oder Verbundwerkstoffplatte, umfassend die Verfahrensschritte:
- Bohren eines Schlagsacklochs in dem Fügepartner, das sich von einem Sacklochoberende an einer Außenfläche des Fügepartners bis zu einem Sacklochunterende in dem Fügepartner erstreckt,
- Ausbilden eines Hinterschnitts in dem Fügepartners an dem Sacklochunterende oder zumindest in dessen Bereich,
- wobei der Hinterschnitt durch Drehen und Spreizen des Hinterschnittankers in dem Sackloch erzeugt wird.

Bevorzugt erfolgt das Setzen des Hinterschnittankers mit dem zuvor beschriebenen Setzwerkzeug.

Typischerweise werden solche Hinterschnittanker im praktischen Anwendungsfall mit folgenden Abmessungen / Einbausituationen eingesetzt:

| | |
|---|---|
| Plattendicke des den Anker aufnehmenden Füge- | 6-18 mm |
| partners | |
| Setztiefe Anker | 4-15 mm |
| Klemmdicke | 0-6 mm |
| Durchmesser Bohrloch | 7 mm |
| Durchmesser Hinterschnitt | 9 mm |

Je nach Anwendungsfall sind selbstverständliche andere geometrische Ausgestaltungen möglich.

Ausführungsformen umfassen die Ausbildung der Stecknuss als lange Stecknuss, wie sie z.B. zum Befestigen von Zündkerzen eingesetzt wird, um eine längeren Einschraublänge zu realisieren.

In der folgenden, ausführlichen Figurenbeschreibung wird auf die beigefügten Zeichnungen Bezug genommen, die Teil dieser Erfindungsbeschreibung bilden und in denen zur Veranschaulichung spezifische Ausführungsformen gezeigt sind, mit denen die Erfindung ausgeübt werden kann. In dieser Hinsicht wird Richtungsterminologie, wie etwa "oben", "unten", "vorne", "hinten", "vorderes", "hinteres", usw. in Bezug auf die Orientierungen der beschriebenen Figur(en) verwendet. Da Komponenten von Ausführungsformen in einer Anzahl verschiedener Orientierung positioniert werden können, dient die Richtungsterminologie zur Veranschaulichung und ist auf keinerlei Weise einschränkend. Es versteht sich, dass andere Ausführungsformen benutzt und strukturelle oder logische Änderungen vorgenommen werden können, ohne von dem Schutzumfang der vorliegenden Erfindung abzuweichen. Die folgende ausführliche Beschreibung ist nicht im einschränkenden Sinne aufzufassen. Im Rahmen dieser Beschreibung werden die Begriffe "verbunden", "angeschlossen" sowie "integriert" verwendet zum Beschreiben sowohl einer direkten als auch einer indirekten Verbindung, eines direkten oder indirekten Anschlusses sowie einer direkten oder indirekten Integration. Sofern nicht anders angegeben, beziehen sich der unbestimmte Artikel und der bestimmte Artikel nicht nur auf ein einzelnes Bauteil, sondern sind zu verstehen als "mindestens eins". Die Terminologie umfasst die zuvor genannten Worte, Abwandlungen davon sowie ähnliche Bedeutungen. Ferner sollte verstanden werden, dass die Begriffe "etwa", "im "Wesentlichen" und ähnliche Begriffe in Verbindung mit den Dimensionen und einer Eigenschaft einer Komponente der Erfindung die beschriebene Dimension und Eigenschaft nicht als strikte Grenze oder Parameter beschreiben und geringfügige Abwandlungen davon nicht ausschließen, welche funktional ähnlich sind. Zumindest umfassen Beschreibungsteile mit numerischen Parametern auch Abwandlungen dieser Parameter gemäß den mathematischen und fertigungstechnischen Prinzipien im Stand der Technik, z.B. Rundungen, Abweichungen und andere systematische Fehler, Fertigungstoleranzen etc. In den Figuren werden identische oder ähnliche Elemente mit identischem Bezugszeichen versehen, soweit dieses zweckmäßig ist. Bezugszeichenlinien sind Linien, die das Bezugszeichen mit dem betreffenden Teil verbinden. Ein Pfeil hingegen, der kein Teil berührt, bezieht sich auf eine gesamte Einheit, auf die er gerichtet ist. Gleiche Bezugsziffern der Figuren beziehen sich auf gleiche Bauteile bzw. Merkmale. Die Darstellungen in den Figuren sind im Übrigen nicht unbedingt maßstäblich. Zur Veranschaulichung von Details können bestimmte Bereiche übertrieben groß dargestellt sein. Darüber hinaus können die Zeichnungen plakativ vereinfacht sein und enthalten nicht jedes bei der praktischen Ausführung gegebenenfalls vorhandene Detail.

Sämtliche Merkmale der jeweiligen Ausführungsbeispiele seien hierbei für sich eigenständig und unabhängig von anderen Merkmalen des jeweiligen Ausführungsbeispiels offenbart. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung. Es zeigen:
- Figur 1: eine stark vergrößerte, isometrische Draufsicht einer ersten Ausführungsform eines Hinterschnittankers;
- Figur 2: eine Ansicht des Hinterschnittankers gemäß Figur 1 von unten;
- Figur 3: den Hinterschnittanker gemäß Figur 2 um 60° gedreht;
- Figur 4: einen Querschnitt durch den Hinterschnittanker gemäß der Linie IV-IV gemäß Figur 2;
- Figur 5: einen Querschnitt durch den Hinterschnittanker entlang der Linie V-V gemäß Figur 3;
- Figur 6: eine Draufsicht einer ersten Ausführungsform des Setzwerkzeugs;
- Figur 7: einen Längsschnitt des Setzwerkzeugs gemäß Figur 6 entlang der Linie VII-VII;
- Figur 8: eine Frontansicht des Setzwerkzeugs gemäß Figur 6;
- Figur 9: eine Rückansicht des Setzwerkzeugs gemäß Figur 6;
- Figur 10: eine Draufsicht der Hauptwelle des Setzwerkzeugs gemäß den Figuren 7;
- Figur 11: eine alternative Ausführungsform eines Setzwerkzeugs im Betriebszustand beim Befestigen eines Hinterschnittankers in einem Fügepartner;
- Figur 12: eine isometrische Draufsicht einer zweiten Ausführungsform eines Hinterschnittankers mit Rändelung;
- Figur 13: eine Ansicht des Hinterschnittankers gemäß Figur 12 von unten;
- Figur 14: einen Querschnitt des Hinterschnittankers gemäß Figur 13 entlang der Linie XIV - XIV;
- Figur 15: das Setzverfahren eines Hinterschnittankers mit dem Setzwerkzeug in einem Fügepartner anhand von vier Teilschritten (A - D), und zwar jeweils am Ende eines Teilschritts;
- Fig. 16: eine Draufsicht einer dritten Ausführungsform des Setzwerkzeugs;
- Figur 17: einen Längsschnitt des Selbstwerkzeugs gemäß Z entlang der Linie A-A;
- Figur 18: eine Frontansicht des Setzwerkzeugs gemäß Figur 16;
- Figur 19: eine Rückansicht des Setzwerkzeugs gemäß Figur 16; und
- Figur 20: eine vergrößerte Draufsicht der Hauptwelle des Satzwerkzeugs gemäß Figur 16.

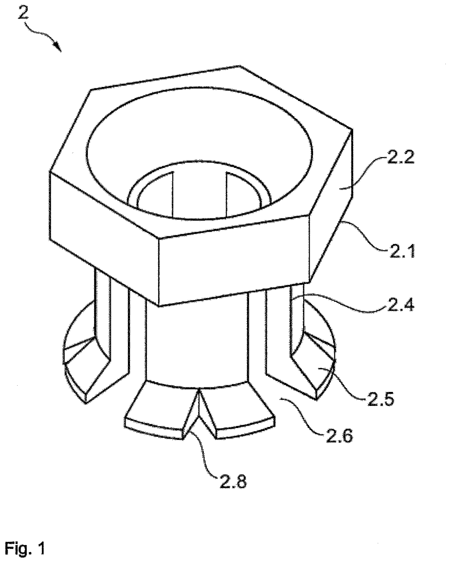

Die Figur 1 zeigt eine isometrische Draufsicht einer ersten Ausführungsform des Hinterschnittankers 2, der aus einem im Wesentlichen hohlzylindrischen Grundkörper besteht, der sich von einem in Einbaulage auf einer Fläche um ein Sackloch herum auf einem Fügepartner mit einem Außenende aufsitzt und sich zu einem in dem Fügepartner befestigten Innenende um eine Ankerlängsachse 2.7 herum erstreckt.

Das Außenende weist einen radial von der Mittellängsachse nach außen ragenden, hier ringförmig geschlossenen Aufsitzabsatz 2.1 auf, der an seiner äußeren Umfangsfläche mit einer sechskantigen Schlüsselfläche 2.2 versehen ist.

Mittig in diesem Grundkörper und dem Außenende ist eine Durchgangsöffnung 2.3 entlang der Ankerlängsachse 2.7 erstreckend ausgebildet und mit einem Innengewinde versehen.

Der Aufsitzabsatz 2.1 ist als am Außenende ausgebildeter, umlaufender Bund mit außenseitigen Schlüsselflächen 2.2 gestaltet. Die Durchgangsöffnung 2.3 weist ein Innengewinde auf, in welche eine Schraube oder ein Einsteckstift mit komplementärem Außengewinde einschraubbar ist. An dem zum Innenende gerichteten Ende des Aufsitzabsatzes 2.1 sind vorliegend vier Spreizarme 2.4 ausgebildet, die einstückig an dem Aufsitzabsatz 2.1 angeformt sind und sich von der Unterseite dessen bis zum Innenende erstrecken. Am Innenende sind sodann radial von der Mittellängsachse des Hinterschnittankers 2 nach außen in einem spitzen Winkel sich erstreckende Hinterschnittabsätze 2.5 ausgebildet, die vorliegend eine - in der Seitenansicht - im Wesentlichen dreieckige Geometrie aufweist, welche einen spitzen Winkel von etwa 45° zwischen der Innenflanke und der Außenflanke einschließen. Der äußere Umfangsrand der Hinterschnittabsätze 2.5 erstreckt sich fast bis zum äußeren Umfangsrand des Aufsitzabsatzes 2.1 oder ist geringfügig kleiner ausgebildet. Zwischen den jeweils aneinander angrenzenden Spreizarmen 2.4 sind Längsschlitze 2.6 ausgebildet, sodass die Spreizarme 2.4 beim Eindrehen einer Schraube in die Durchgangsöffnung 2.3 unabhängig voneinander im Verhältnis zur Ankerlängsachse 2.7 auslenkbar sind.

In der Mitte jeder äußeren Umfangsfläche jedes Hinterschnittabsatzes 2.5 ist eine gleichschenkelige, hier in V-förmige Schneidkerbe 2.8 eingebracht, deren Scheitelpunkt sich bis zum Äußeren des Spreizarms 2.4 erstreckt. Die Ecken dieser Schneidkerben 2.8 zusammen mit den Ecken der den Längsschlitzen 2.6 zugewandten Enden der Spreizarme 2.4 bilden die Schneidflächen zum Einschneiden in das umgebende Material beim Drehen des Hinterschnittankers 2 um die Ankerlängsachse 2.7 herum zum Ausbilden des Hinterschnitts am Boden eines Sacklochs.

Im Lieferzustand sind die Spreizarme 2.4 zur Ankerlängsachse 2.7 hin eingebogen, so dass die äußeren Flanken der Hinterschnittabsätze 2.5 etwa mit dem Bereich abschließen, wo die Spreizarme 2.4 an dem Innenende des Aufsatzabsatzes 2.1 angeformt sind.

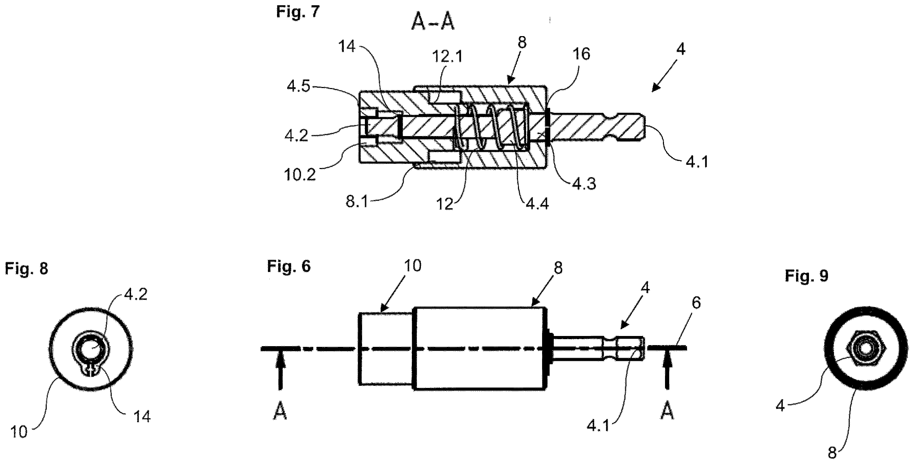

Figur 6 zeigt eine Draufsicht des Setzwerkzeugs, im Wesentlichen umfassend eine Hauptwelle 4, die sich entlang einer Setzwerkzeuglängsachse 6 von einem proximalen Antriebsende 4.1 zu einem distalen Wirkende 4.2 erstreckt. Auf dieser Hauptwelle 4 ist eine außenseitige, hohlzylindrische Hülse 8 aufgesetzt. Drehfest und längsverschieblich auf der Hauptwelle 4 ist ferner eine Stecknuss 10.

Die Hauptwelle weist am Antriebsende 4.1 mehrere Schlüsselflächen auf, hier als Sechskant ausgebildet, die in ein Spannfutter oder einen Bithalter in einem angetriebenen Spannfutter einer Bohrmaschine oder eines Akkuschraubers drehfest einsetzbar ist. In distaler Richtung an das Wirkende 4.1 schließt sich ein Hülsenabschnitt 4.3 an, auf dem die hohle und mit einer zentralen Durchgangsöffnung versehene Hülse 8 mit einer Schulter aufsitzt, wozu diese eine zentrale Durchgangsöffnung aufweist. Distal anschließend an diesen Hülsenabschnitt 4.3 ist an der Hauptwelle 4 ein radial verbreiteter Hülsenanschlag 4.4 ausgebildet, an dem die Hülse 8 mit der oberen Schulter anliegt. Die äußere Mantelfläche der Hülse 8 erstreckt sich von dem Hülsenabschnitt 4.3 bis etwa zum Ende der Hauptwelle kurz vor dem als Spreizende 4.5 ausgebildeten Wirkende 4.2.

An den radial verbreiterten Hülsenanschlag 4.4 schließt sich distal ein wiederum mit radial reduziertem Außendurchmesser ein Nussabschnitt 4.8 an, in dem in einer Passfedernut eine Passfeder sitzt, welche die Hauptwelle 4 drehfest mit der Stecknuss 10 verbindet.

An diesen Nussabschnitt 4.8 schließt sich an der Hauptwelle 4 ein zylindrischer Distalabschnitt 4.6 mit gegenüber dem Nussabschnitt 4.8 leicht reduziertem Außendurchmesser an.

Innenseitig zwischen dem Hülsenanschlag 4.4 und der inneren Mantelfläche der hohlzylindrischen Hülse 8 ist eine Druckfeder 12 eingesetzt, welche auf das proximale Ende der Stecknuss 10 wirkt.

An der Stecknuss 10 kann am proximalen Ende ein außenseitiger Stecknussabsatz 10.1 zur Bildung eines Anschlags ausgebildet sein, der korrespondierend zu einem innenseitigen Hülsenabsatz 8.1 an der distalen Innenseite der Hülse 8 ausgebildet sein kann, so dass diese korrespondierend ausgebildeten Absätze 8.1, 10.1 ein Mittel zur Festlegung der Eindringtiefe der Stecknuss 10 in die diese aufnehmende Hülse 8 bildet, wenn die Stecknuss 10 axial verschoben wird im Verhältnis zu der stationären Hülse 8.

Die Stecknuss 10 kann axial fixiert sein auf dem distalen Ende 4.6 der Hauptwelle 4 mittels eines Sprengrings 14, der am Übergang zwischen dem Distalabschnitt 4.6 der Hauptwelle 4 zum Spreizende 4.5 mit reduziertem Durchmesser sitzt. Am Vorderende, also dem distalen Ende weist die Stecknuss 17 innenseitig eine Schlüsselfläche 10.2 auf, vorliegend ausgebildet als Sechskant.

Die Hülse 8 ist in proximaler Richtung auf der Hauptwelle 4 mittels eines weiteren Sprengrings 16 fixiert.

Zur Realisierung einer drehfesten Verbindung zwischen der Stecknuss 10 und der Hauptwelle 4 ist das Distalende 4.6 mit außenseitigen Schlüsselflächen versehen, auf welchen korrespondierende Passungsflächen an der Innenseite der zentralen Durchgangsöffnung der Stecknuss 10 drehfest, aber längsverschieblich aufsitzt.

Somit ist die Stecknuss 10 zwischen der in der den Figuren 6 und 7 dargestellten ausgefahrenen Position in eine nicht dargestellte eingefahrene Position verschiebbar, in welcher der innenseitige Hülsenabsatz 8.1 mit dem außenseitigen und korrespondierenden Stecknussabsatz 10.1 zum Anschlag kommt und somit auch die Druckfeder 12 komprimiert wird. Dieses ist der Fall, wenn die Stecknuss 10 auf die außenseitige Schlüsselfläche 2.2 des Hinterschnittankers zwei aufgesetzt ist und bei Drehung der Hauptwelle 4 gleichzeitig Druck auf die Hauptwelle 4 in axialer Richtung ausgeübt wird, sodass das distale Spreizende 4.5 der Hauptwelle in die Durchgangsöffnung 2.3 des Hinterschnittankers 2 eintritt und die Spreizarme 2.4 radial nach außen drücken. Bei einer weiteren Rotation der Hauptwelle 4 mittels des Antriebs wird somit durch die radial abragenden Hinterschnittabsätze 2.5 am Innenende der Spreizarme 2.4 in dem Material am Boden des Sacklochs der korrespondierende Hinterschnitt ausgebildet.

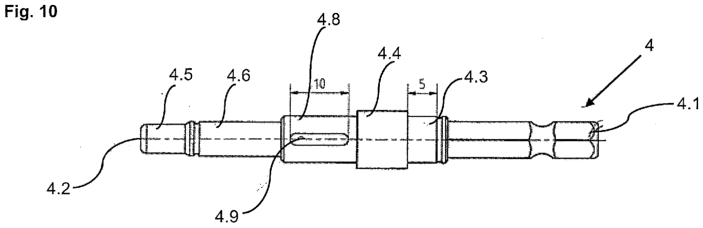

Figur 10 zeigt eine Draufsicht auf die Hauptwelle 4 als Einzelteil. Besser erkennbar ist hier, dass der Nussabschnitt 4.8 einen leicht vergrößerten Außendurchmesser gegenüber dem Distalabschnitt 4.6 aufweist und in diesem Nussabschnitt eine Passfedernut 4.9 zur Aufnahme einer Passfeder zur drehfesten, aber gleichzeitig längsverschieblichen Verbindung mit der Stecknuss 10. Selbstverständlich sind andere formschlüssige Verbindungen möglich, wie z.B. ein Vier- oder Sechskant.

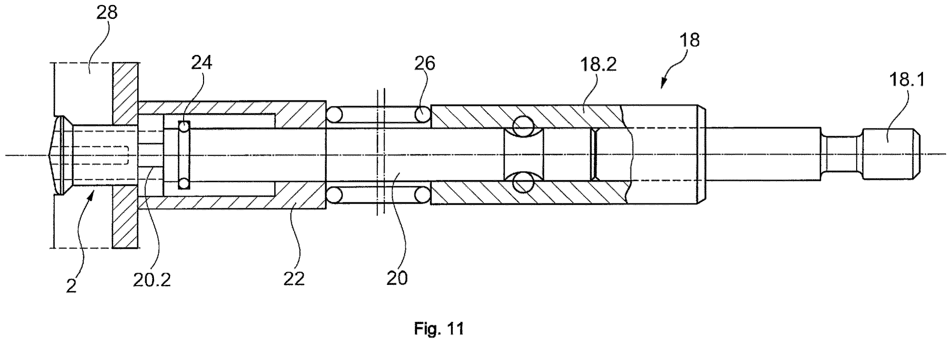

Figur 11 zeigt sodann einen Längsschnitt einer zweiten Ausführungsform eines Setzwerkzeugs 17 umfassend einen Universalbithalter 18, der mit einer proximalen Bitaufnahme 18.1 drehfest und lösbar in ein Bohrfutter eines Akkuschraubers oder einer Bohrmaschine einsetzbar ist. Dieser Bithalter 18 umfasst eine Einsteckhülse 18.2 mit einer inneren, federgespannten Kugelsperre, die in bekannter Weise über eine Axialverstellung der Einsteckhülse 18.2 freigebbar ist.

In die Einsteckhülse 18.02 ist eine Welle 20 mit einem Au-ßensechskant drehfest eingesetzt und über die Kugelsperre in dieser drehfest arretierbar.

Am distalen Ende der Welle 20 ist eine hohle Stecknuss 22 befestigt und über einen distalen Sprengring 24 distal - gesichert. Die Stecknuss 22 sitzt drehfest und längsverschieblich auf einem Vierkant-Abschnitt 20.1 der Welle 20. Zwischen der Einsteckhülse 18.2 des Bithalters 18 und der Stecknuss 22 ist eine Druckfeder 26 angeordnet. Auf diese Weise kann das distale Wirkende der Stecknuss 22 auf die außenseitigen Schlüsselflächen des Aufsitzabsatzes 2.1 des in ein Sackloch in einer Fassadenplatte 28 eingesetzten Hinterschnittankers 2 aufgesetzt werden, der in ein Sackloch eingesetzt ist. Durch Drehung des Setzwerkzeugs 17 und gleichzeitiges axiales Niederdrücken in distaler Richtung, wird das distale Spreizende 20.2 der Welle 20 in den Hinterschnittanker 2 eingeschoben, wobei dessen Spreizarme 2 radial nach außen gedrückt werden, so dass diese bei Drehung den Hinterschnitt am Boden des Sacklochs eingeschnitten wird.

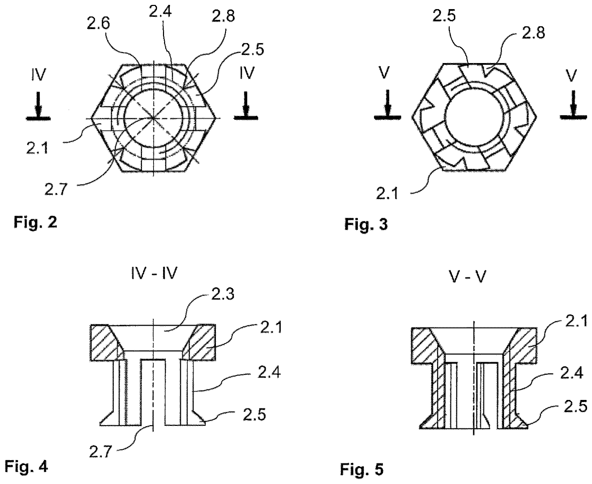

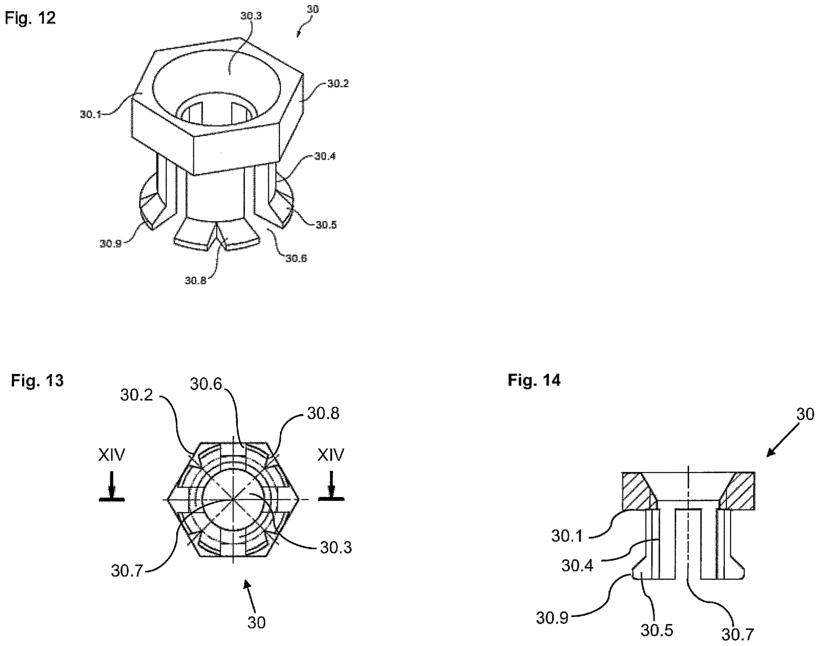

Die Figuren 12 bis 14 zeigen die zweite Ausführungsform des Hinterschnittankers 30, der grundsätzlich ähnlich aufgebaut ist wie die in den Figuren 1-5 dargestellte erste Ausführungsform, weshalb für diesen Hinterschnittanker 30 auch dieselben Bezugszeichen nach dem Punkte verwendet werden, also jeweils die 30.X.

Im Unterschied zu der in den Figuren 1 bis 5 dargestellten ersten Ausführungsform weist diese zweite Ausführungsform einen stabileren, vorliegend höheren Hinterschnittabsatz 30.5 am Innenende der Spreizarme 30.4 auf. Dieses ist deshalb so, weil an den radialen Außenenden bzw. an den äußeren Umfangsflächen der Hinterschnittabsätze 30.5 zusätzlich jeweils eine Rändelung 30.9 ausgebildet ist, um den Materialabtrag für die Bildung des Hinterschnitts in dem Sackloch zu verbessern und zu vergrößern. Neben den auch bei dieser Ausführungsform vorgesehenen, winkelförmigen Schneidkanten 30.8 in der äußeren Umfangsflächen der ebenfalls als Kreisbogensegmente ausgebildeten Hinterschnittabsätze 30.5 ist die Höhe h der Hinterschnittabsätze 30.5 etwa zwei bis viermal so hoch ausgebildet wie bei der ersten Ausführungsform. Die äußere Umfangsfläche der Hinterschnittabsätze 30.5 weist bevorzugt die Höhe h zwischen 0,2 bis 1 mm, vorzugsweise 0,5 mm auf. Als Höhe h der äußeren Umfangsfläche der Hinterschnittabsätze 30.5 ist der Abstand zwischen dem sich quer zur Mittellängsachse erstreckenden Innenende oder Innenflanke 30.10 der Spreizarme 30.4 und der Außenflanke 30.11 des Hinterschnittabsatzes 30.5 zu verstehen, der mit der Mittellängsachse oder Ankerlängsachse 30.7 einen Winkel von etwa 45 Grad einschließt.

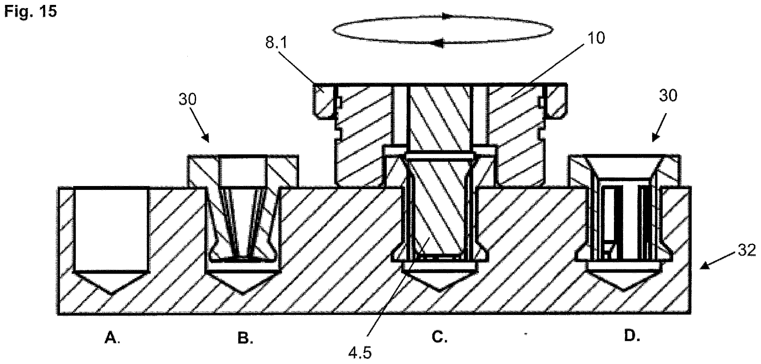

Die Figurenfolge von Figur 15 erläutert in vergrößerter Ansicht in vier Teilschritten A - D das erfindungsgemäße Setzverfahren, und zwar jeweils am Ende eines Teilschritts.

In Schritt A wurde zunächst in den Fügepartner 32 ein Sackloch mittels Bohren eingebracht, und zwar vorzugsweise so tief, dass die Bohrung des Sacklochs etwas tiefer als die Länge des Hinterschnittankers 30 ist, der Hinterschnittanker 30 also mit seinen Spreizarmen nicht ganz bis zum Boden des Sacklochs reicht.

In Schritt B wurde der Hinterschnittanker 30 mit zusammengedrückten Spreizarmen 30.4 in dieses Sackloch eingesetzt.

Sodann wir das Setzwerkzeug 4 auf die die außenseitigen Schlüsselflächen 30.2 an dem Aufsitzabsatz 30.1 des Hinterschnittankers 30 aufgesetzt. Durch Drehen des Setzwerkzeugs 4 und Eindrücken, also axiales Verstellen des Spreizendes 4.5 zwischen die Spreizarme 30.4 des Hinterschnittankers 30 werden sodann durch die Hinterschittabsätze 30.5 in den Fügepartner 32 eingebracht, und zwar exakte angepasst an den jeweiligen Hinterschnittanker 30, was diesem aufgrund der formschlüssigen Verbindung einen besonders festen Halt bietet.

Nach Entfernen des Setzwerkzeugs Am Ende von Schritt D ist der Hinterschnittanker 30 Anker fertig gespreizt und gesetzt, also unverlierbar formschlüssig in dem Fügepartner gehalten.

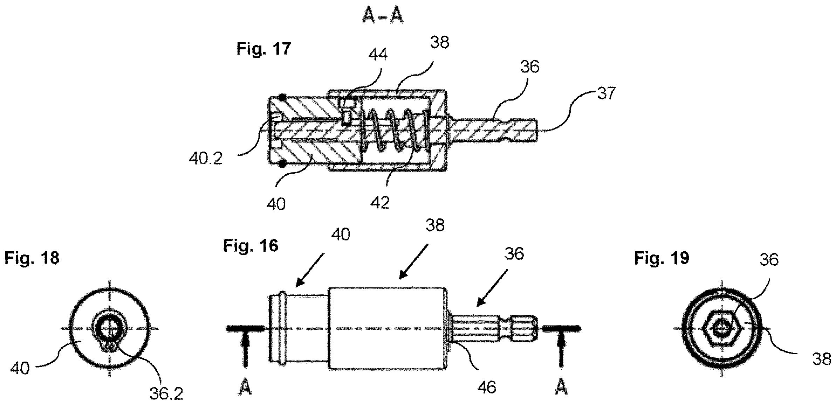

Figur 16 zeigt eine Draufsicht einer weiteren Ausführungsform eines Setzwerkzeugs, im Wesentlichen wieder umfassend eine Hauptwelle 36, die sich entlang einer Setzwerkzeuglängsachse 37 von einem proximalen Antriebsende 36.1 zu einem distalen Wirkende 36.2 erstreckt. Auf dieser Hauptwelle 36 ist eine außenseitige, hohlzylindrische Hülse 38 aufgesetzt. In der Hülse 38 ist wieder längsverschieblich eine Stecknuss 40 aufgenommen, die ferner drehfest über eine außenseitig seitlich in die Stecknuss 40 eingedrehte Schraube, hier vor allem eine Madenschraube 42 mit der Hauptwelle 36 verbunden ist.

Die Hauptwelle 36 weist am Antriebsende 36.1 mehrere als Sechskant ausgebildete Schlüsselflächen auf, die in ein Spannfutter oder einen Bithalter in einem angetriebenen Spannfutter einer Bohrmaschine oder eines Akkuschraubers drehfest einsetzbar ist. In distaler Richtung an das Wirkende 36.1 schließt sich ein Hülsenabschnitt 36.3 an, auf dem die hohle und mit einer zentralen Durchgangsöffnung versehene Hülse 38 mit einer Schulter aufsitzt, wozu diese eine zentrale Durchgangsöffnung aufweist. Distal anschließend an diesen Hülsenabschnitt 36.3 ist an der Hauptwelle 36 ein radial verbreiteter Hülsenanschlag 36.4 ausgebildet, an dem die Hülse 38 mit der oberen Schulter anliegt.

An den radial verbreiterten Hülsenanschlag 36.4 schließt sich distal wiederum mit radial reduziertem Außendurchmesser ein Nussabschnitt 36.8 an, in dem einseitig eine als Passfedernut gestaltete Langnut 36.9 ausgebildet ist.

An den Nussabschnitt 36.8 schließt sich an der Hauptwelle 36 ein zylindrischer Distalabschnitt 36.6 mit gegenüber dem Nussabschnitt 36.8 leicht reduziertem Außendurchmesser an. Das distale Ende dieses Distalabschnitts 36.6 bildet das Wirkende 36.2 der Hauptwelle 36.

Die Hülse 38 erstreckt sich vorzugsweise von dem Hülsenabschnitt 36.3 bis über das Ende des Nussabschnitts 36.8.

Die distale Fixierung der Stecknuss 40 kann vorliegend wieder über einen nicht dargestellten Sprengring auf dem distalen Ende der Hauptwelle 36 erfolgen. Am Vorderende, also dem distalen Ende weist die Stecknuss 17 innenseitig eine Schlüsselfläche 40.2 auf, vorliegend ausgebildet als Sechskant.

Die Hülse 8 ist in proximaler Richtung auf der Hauptwelle 36 mittels eines weiteren Sprengrings 16 fixiert.

Innenseitig zwischen der Hülse 38 und der Stecknuss 40 ist unter Vorspannung eine Druckfeder 42 aufgenommen, welche die Stecknuss 40 aus der Hülse 38 hinausdrückt. Eine seitlich in die Stecknuss 40 eingedrehte Zylinderkopfschraube 44 greift in die Langnut 36.9 ein und beschränkt damit gleichzeitig die vordere und hintere Anschlagposition der Stecknuss 40 im verhältnis zu der diese längsverschieblich aufnehmenden Hülse 38.

Zur Realisierung einer drehfesten Verbindung zwischen der Stecknuss 10 und der Hauptwelle 4 ist das Distalende 4.6 mit außenseitigen Schlüsselflächen versehen, auf welchen korrespondierende Passungsflächen an der Innenseite der zentralen Durchgangsöffnung der Stecknuss 10 drehfest, aber längsverschieblich aufsitzt.

Somit ist die Stecknuss 10 zwischen der in der den Figuren 6 und 7 dargestellten ausgefahrenen Position in eine nicht dargestellte eingefahrene Position verschiebbar, in welcher der innenseitige Hülsenabsatz 8.1 mit dem außenseitigen und korrespondierenden Stecknussabsatz 10.1 zum Anschlag kommt und somit auch die Druckfeder 12 komprimiert wird. Dieses ist der Fall, wenn die Stecknuss 10 auf die außenseitige Schlüsselfläche 2.2 des Hinterschnittankers zwei aufgesetzt ist und bei Drehung der Hauptwelle 4 gleichzeitig Druck auf die Hauptwelle 4 in axialer Richtung ausgeübt wird, sodass das distale Spreizende 4.5 der Hauptwelle in die Durchgangsöffnung 2.3 des Hinterschnittankers 2 eintritt und die Spreizarme 2.4 radial nach außen drücken. Bei einer weiteren Rotation der Hauptwelle 4 mittels des Antriebs wird somit durch die radial abragenden Hinterschnittabsätze 2.5 am Innenende der Spreizarme 2.4 in dem Material am Boden des Sacklochs der korrespondierende Hinterschnitt ausgebildet.

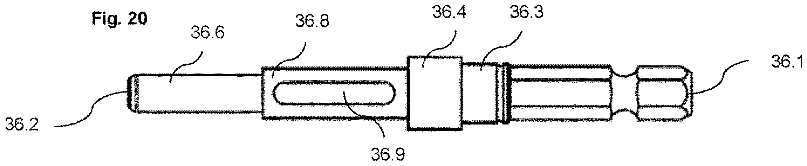

Figur 20 zeigt eine vergrößerte Draufsicht auf die Hauptwelle 36 als Einzelteil. Besser erkennbar ist hier, dass der Nussabschnitt 36.8 einen leicht vergrößerten Außendurchmesser gegenüber dem Distalabschnitt 36.6 aufweist und in diesem Nussabschnitt die Langnut 36.9 zur drehfesten aber relativbeweglichen Aufnahme der Zylinderkopfschraube 44 aufweist.

Zusammenfassend betrifft die Erfindung ein Setz- oder Befestigungsverfahren zur Befestigung eines Hinterschnittankers, der zur Vereinfachung der Ausbildung eines korrespondierenden Hinterschnitts in einem Sackloch zur Aufnahme des Hinterschnittankers ausgebildet ist, um diesen Hinterschnitt durch Drehung und Spreizung des Hinterschnittankers selbständig zu schneiden bzw. auszubilden.

Hierzu wird ferner ein Setzwerkzeug zum Ausbilden dieses Hinterschnitts an dem Sacklochunterende des Sacklochs in dem Fügepartner offenbart.

Schließlich wird ein Verfahren zum Ausbilden eines Hinterschnitts an einem Sacklochuntergrund eines Sachlochs in einem Fügepartner unter Verwendung eines Setzwerkzeugs offenbart.

### Bezugszeichenliste

- 2: Hinterschnittanker
- 2.1: Aufsitzaufsitzt
- 2.2: Schlüsselfläche
- 2.3: Durchgangsöffnung
- 2.4: Spreizarm
- 2.5: Hinterschnittabsatz
- 2.6: Längsschnitt
- 2.7: Ankerlängsachse
- 2.8: Schneidkerbe
- 4: Hauptwelle
- 4.1: Antriebsende
- 4.2: Wirkende
- 4.3: Hülsenabschnitt
- 4.4: Hülsenanschlag
- 4.5: Spreizende
- 4.6: Distalabschnitt
- 4.8: Nussabschnitt
- 4.9: Passfedernut
- 6: Setzwerkzeuglängsachse
- 8: Hülse
- 8.1: Hülsenabsatz
- 10: Stecknuss
- 10.1: Stecknussabsatz
- 10.2: Schlüsselfläche
- 12: Druckfeder
- 12.1: Nussabsatz
- 14, 16: Sprengring
- 17: Setzwerkzeug
- 18: Bithalter
- 18.1: Bitaufnahme
- 18.2: Einsteckhülse
- 20: Welle
- 20.1: Vierkant-Abschnitt
- 20.2: Spreizende
- 22: Stecknuss
- 24: Sprengring
- 26: Druckfeder
- 28: Fassadenplatte
- 30: Hinterschnittanker
- 30.1: Aufsitzabsatz
- 30.2: Schlüsselfläche
- 30.3: Durchgangsöffnung
- 30.4: Spreizarm
- 30.5: Hinterschnittabsatz
- 30.6: Längsschnitt
- 30.7: Ankerlängsachse
- 30.8: Schneidkerbe
- 30.9: Rändelung
- 30.10: Innenflanke
- 30.11: Außenflanke
- 32: Fügepartner
- 34: Sackloch
- 36: Hauptwelle
- 36.1: Antriebsende
- 36.2: Wirkende
- 36.3: Hülsenabschnitt
- 36.4: Hülsenanschlag
- 36.6: Distalabschnitt
- 36.8: Nussabschnitt
- 36.9: Langnut
- 36.5: Spreizende
- 37: Setzwerkzeuglängsachse
- 38: Hülse
- 40: Stecknuss
- 40.2: Schüsselfläche
- 42: Druckfeder
- 44: Zylinderkopfschraube
- 46: Sprengring

## Patentansprüche

1. Setz- oder Befestigungsverfahren zur Befestigung eines Hinterschnittankers (2; 30) mit
einem sich entlang und um eine Ankerlängsachse (2.7; 30.7) erstreckenden, im wesentlichen hohlzylindrischen Grundkörper,
der sich von einem in Einbaulage angeordneten Außenende zu einem Innenende erstreckt,
wobei das Außenende einen radial nach außen ragenden, Aufsitzabsatz (2.1; 30.1) aufweist,
der eine sich entlang der Ankerlängsachse erstreckende Durchgangsöffnung (2.3; 30.3) mit einem Innengewinde aufweist,
der um eine Sacklochbohrung herum auf einer Außenfläche eines Fügepartner aufsetzbar ausgebildet ist
und der Schlüsselflächen (2.2; 30.2) an einer äußeren Umfangsfläche zur drehfesten Verbindung mit einem Werkzeug, insbesondere eines Setzwerkzeug (17) aufweist,
wobei von dem Aufsitzabsatz (2.1; 30.1) mehrere armförmige und parallel versetzt zur Ankerlängsachse erstreckende und spreizbare Spreizarme (2.4; 30.4) ausgebildet sind,
wobei an dem Innenende der Spreizarme (2.4; 30.4) jeweils ein radial nach außen ragender Hinterschnittabsatz (2.5; 30.5) ausgebildet ist,
und wobei der Hinterschnittabsatz (2.5; 30.5) zum Schneiden eines Hinterschnitts in den Fügepartner ausgebildet ist,
in einem Fügepartner, insbesondere einer Beton- oder Verbundwerkstoffplatte,
umfassend die Verfahrensschritte:
Bohren eines Sacklochs in dem Fügepartner, welches sich von einem Sacklochoberende an einer Außenfläche des Fügepartners bis zu einem Sacklochunterende in dem Fügepartner erstreckt, und Ausbilden eines Hinterschnitts in dem Fügepartner an dem Sacklochunterende,
**DADURCH GEKENNZEICHNET,**
**dass** der Hinterschnitt nur durch Drehen und Spreizen des Hinterschnittankers (2; 30) gebildet wird.

2. Befestigungsverfahren nach Anspruch 1,
**DADURCH GEKENNZEICHNET,**
**dass** das Drehen und Spreizen in dem Sackloch mit einem Setzwerkzeug (17) erfolgt mit
einer sich um eine Rotationsachse sich von einem proximalen Ende bis zu einem distalen Ende erstreckenden Hauptwelle (4; 36)
die sich von einem als Antriebsende (4.1; 36.1) ausgebildeten, proximalen Ende entlang einer Setzwerkzeuglängsachse (6; 37) zu einem distalen Wirkende (4.2; 36.2) erstreckt,
wobei das Antriebsende (4.1; 36.1) zur drehfesten Verbindung mit einem Rotationsantrieb ausgebildet ist,
wobei an dem Wirkende eine Stecknuss (10; 22) mit einer Aufnahmeöffnung und darin ausgebildeten Schlüsselflächen zur drehfesten Aufnahme eines Aufsitzabsatzes eines Hinterschnittankers (2; 30) ausgebildet ist,
wobei die Stecknuss (10; 22) drehfest mit der Hauptwelle (4) verbunden oder verbindbar ist,
wobei die Stecknuss (10; 22) längsverschieblich auf der Hauptwelle (4) angeordnet ist,
wobei die Hauptwelle (4) am distalen Ende ein Spreizende (4.5; 20.2) aufweist
und wobei eine Druckfeder (12; 26) auf ein proximales Ende der Stecknuss (20; 22) wirkt.

## Claims

1. Setting or fastening method for fastening an undercut anchor (2; 30) with a substantially hollow cylindrical body extending along and around a longitudinal anchor axis (2.7; 30.7),
which extends from an outer end arranged in the installation position to an inner end,
the outer end having a radially outwardly projecting, seating shoulder (2.1; 30.1),
which has a through opening (2.3; 30.3) extending along the longitudinal axis of the anchor and having an internal thread,
which is designed to be placed around a blind hole on an outer surface of a joining partner
and comprising wrench flats (2.2; 30.2) on an outer circumferential surface for rotationally fixed connection to a tool, in particular a setting tool (17), wherein a plurality of arm-shaped and spreadable spreading arms (2.4; 30.4) extending parallel offset to the longitudinal axis of the anchor are formed by the seating shoulder (2.1; 30.1),
and wherein an undercut shoulder (2.5; 30.5) projecting radially outwardly is formed at the inner end of each of the spreader arms (2.4; 30.4),
in a joining partner, especially a concrete or composite slab, comprising the method steps:
drilling a blind hole in the joining partner, which extends from a blind hole upper end at an outer surface of the joining partner to a blind hole lower end in the joining partner,
and forming an undercut in the joining partner at the bottom of the blind hole, **CHARACTERIZED IN**
**that** the undercut is formed only by rotating and spreading the undercut anchor (2; 30).

2. Fastening method according to claim 1,
**CHARACTERIZED IN**
**that** the rotating and spreading in the blind hole is performed with a setting tool (17) with
a main shaft (4; 36) extending about an axis of rotation from a proximal end to a distal end
which extends from a proximal end formed as a drive end (4.1; 36.1) along a setting tool longitudinal axis (6; 37) to a distal working end (4.2; 36.2),
wherein the drive end (4.1; 36.1) is designed for rotationally fixed connection to a rotary drive,
wherein a socket (10; 22) with a receiving opening and wrench flats formed therein is formed at the working end for rotationally fixed reception of a seating shoulder of an undercut anchor (2; 30),
wherein the socket (10; 22) is connected or connectable to the main shaft (4) in a rotationally fixed manner,
wherein the socket (10; 22) is arranged longitudinally displaceably on the main shaft (4),
wherein the main shaft (4) has a spreading end (4.5; 20.2) at the distal end and wherein a compression spring (12; 26) acts on a proximal end of the socket (20; 22).

## Revendications

1. Procédé de pose ou de fixation pour fixer, dans un partenaire d'assemblage, en particulier dans un panneau en béton ou en matériau composite, un dispositif d'ancrage à contre-dépouille (2 ; 30) comprenant un corps de base sensiblement cylindrique creux s'étendant le long et autour d'un axe longitudinal d'ancrage (2.7 ; 30.7),
qui s'étend d'une extrémité extérieure, disposée en position de montage, à une extrémité intérieure,
l'extrémité extérieure présentant un épaulement d'appui (2.1 ; 30.1) faisant saillie radialement vers l'extérieur,
qui présente une ouverture de passage (2.3 ; 30.3) s'étendant le long de l'axe longitudinal d'ancrage et présentant un taraudage,
qui est réalisé de manière à pouvoir être posé autour d'un trou borgne sur une surface extérieure d'un partenaire d'assemblage,
et qui présente des surfaces à clé (2.2 ; 30.2) sur une surface périphérique extérieure pour la liaison solidaire en rotation avec un outil, en particulier avec un outil de pose (17),
plusieurs bras expansibles (2.4 ; 30.4) étant prévus, qui sont en forme de bras décalés parallèlement à l'axe longitudinal d'ancrage et expansibles, un épaulement à contre-dépouille (2.5 ; 30.5) faisant saillie radialement vers l'extérieur étant formé à l'extrémité intérieure de chacun des bras expansibles (2.4 ; 30.4),
et l'épaulement à contre-dépouille (2.5 ; 30.5) étant conçu pour couper une contre-dépouille dans le partenaire d'assemblage,
comprenant les étapes de procédé consistant à :
percer un trou borgne dans le partenaire d'assemblage, qui s'étend depuis une extrémité supérieure du trou borgne sur une surface extérieure du partenaire d'assemblage jusqu'à une extrémité inférieure du trou borgne dans le partenaire d'assemblage, et
former une contre-dépouille dans le partenaire d'assemblage à l'extrémité inférieure du trou borgne,
**caractérisé en ce que**
la contre-dépouille est formée uniquement en faisant tourner et en écartant le dispositif d'ancrage à contre-dépouille (2 ; 30).

2. Procédé de fixation selon la revendication 1,
**caractérisé en ce que** la rotation et l'écartement dans le trou borgne s'effectuent avec un outil de pose (17) comprenant
un arbre principal (4 ; 36) s'étendant autour d'un axe de rotation depuis une extrémité proximale jusqu'à une extrémité distale,
qui s'étend depuis une extrémité proximale, réalisée sous forme d'extrémité d'entraînement (4.1 ; 36.1), le long d'un axe longitudinal de l'outil de pose (6 ; 37) jusqu'à une extrémité active distale (4.2 ; 36.2),
l'extrémité d'entraînement (4.1 ; 36.1) étant conçue pour la liaison solidaire en rotation avec un entraînement rotatif,
l'extrémité active présentant une douille d'enfichage (10 ; 22) avec une ouverture de réception et des surfaces à clé formées dans celle-ci pour la réception solidaire en rotation d'un épaulement d'appui d'un dispositif d'ancrage à contre-dépouille (2 ; 30),
la douille d'enfichage (10 ; 22) étant reliée ou pouvant être reliée de manière solidaire en rotation à l'arbre principal (4),
la douille d'enfichage (10 ; 22) étant disposée de manière à pouvoir se déplacer longitudinalement sur l'arbre principal (4),
l'arbre principal (4) présentant, à l'extrémité distale, une extrémité expansible (4.5 ; 20.2),
et un ressort de compression (12 ; 26) agissant sur une extrémité proximale de la douille d'enfichage (20 ; 22).
